# EUROPÄISCHE PATENTANMELDUNG

(11) **EP 1 504 806 A2**
(43) Veröffentlichungstag der Anmeldung: **09.02.2005**
(21) Anmeldenummer: 04018257.8
(22) Anmeldetag: 02.08.2004
(51) Int. Cl.: B01D 53/88, B01D 53/86, F15B 21/04, H05B 3/50

(54) **Gasaufbereitungsanlage**

(30) Priorität: 08.08.2003 DE 10336766; 05.12.2003 DE 10357337
(71) Anmelder: Columbus Filter GmbH, 52428 Jülich (DE)
(72) Erfinder: Heckmann, Johannes, 37434 Gieboldehausen (DE)
(74) Vertreter: Patentanwaltskanzlei Liermann-Castell

(57) **Zusammenfassung**

Die Gasaufbereitungsanlage weist einen Behälter (11), eine Heizeinrichtung und einen Katalysator auf. Die Heizeinrichtung hat einen Wärmeverteiler (4), in dem ein Sackloch (5) angeordnet ist. In dieses Sackloch (5) ist eine Heizpatrone (15) einsteckbar, die vorzugsweise druckdicht im Behälterdeckel fixiert ist. Der Wärmeverteiler (4) ist vorzugsweise abgedichtet gegen die Unterseite des Behälterdeckels geschraubt.

## Beschreibung

Die Erfindung betrifft eine Gasaufbereitungsanlage mit einem Behälter, einer Heizeinrichtung und einem Katalysator. Eine derartige Gasaufbereitungsanlage ist beispielsweise aus der DE 100 08 609 C1 bekannt.

Beim Komprimieren von Gasen wie Luft mittels herkömmlichen Kolben oder Schraubenverdichtem wird das komprimierte Gas technisch bedingt mit Aerosolen und Öldampf verunreinigt, was für die meisten Anwendungen der komprimierten Gase unerwünscht oder unakzeptabel ist. In der DE 100 08 609 wird daher vorgeschlagen, die verunreinigten Druckgase über einen Oxidationskatalysator vom Hopcalit-Typ strömen zu lassen. Dadurch gelingt es kontinuierlich Ölbestandteile und flüchtige organische Verbindungen aus Druckgasen bei der Druckgaserzeugung zu entfernen. Um die gewünschte Reaktion zu erzielen, muss der Katalysator mit einer Heizeinrichtung erwärmt werden. Als Wärmequelle wird hierbei eine fest mit einem Wärmeverteiler verbundene Heizpatrone vorgesehen, die in ein Druckgefäß eingebracht wird. Beim Betrieb des Katalysators wird die von der Heizpatrone erzeugte Wärme an den die Patrone umgebenden sternförmigen Wärmeverteiler abgegeben, der wiederum das Katalysatorgranulat erwärmt. Die feste Verbindung zwischen der Heizpatrone und dem Wärmeverteiler sorgt für einen guten Wärmeübergang und der aus Aluminium hergestellte Wärmeverteiler kann sich bei Drücken in Behälter an der Heizpatrone abstützen.

Bei einem Defekt der Heizpatrone wird somit die Heizpatrone mit samt dem Wärmeverteiler ausgetauscht.

Da hierdurch höhere Kosten als beim bloßen Austausch der Heizpatrone entstehen, wird erfindungsgemäß vorgeschlagen, dass die Heizeinrichtung einen Wärmeverteiler mit einem Sackloch und einer darin angeordneten Heizung aufweist und die Heizung beweglich im Sackloch angeordnet ist.

Dies erlaubt es, die Heizung bei einem Defekt aus dem Sackloch herauszuziehen und eine neue Heizung in das Sackloch einzuführen. Überraschend hat sich herausgestellt, dass auch im Hinblick auf unterschiedlichste Anforderungen an Druckluftbehälter eine derartige Lösung mit einem Sackloch und einer dort hineingeschobenen Heizung sämtlichen Forderungen entspricht.

Vorteilhaft ist es, wenn der Behälter im Bereich des Sackloches eine druckdicht verschließbare Öffnung aufweist. Der im Behälter anstehende Druck wirkt somit auf den Wärmeverteiler, dessen Sackloch jedoch zum Atmosphärendruck nicht offen ist sondern druckdicht verschlossen ist. Dies erhöht die Sicherheit, dass Gase aus dem Behälter nicht über das Sackloch in die Atmosphäre entweichen.

Eine bevorzugte Ausführungsform sieht vor, dass der Wärmeverteiler einen Flansch aufweist, mit dem er gegen die Unterseite eines Behälterdeckels geschraubt ist. Die Montage bekannter Heizpatronen mit den sie umschließenden Aluminiumprofilen in den Druckbehälter wird bei bekannten Konstruktionen so ausgeführt, dass sie von innen in die Deckelunterseite geschraubt werden und die Kabel durch eine Druckdurchführung nach außen geleitet werden.

Da die Heizpatronen störanfällige Bauteile sind, müssen sie häufig schon vor dem Katalysatorgranulat ausgetauscht werden. Da die Heizpatronen jedoch nur zusammen mit dem sternförmigen Wärmeverteiler austauschbar sind, muss beim Austausch der Heizpatrone das gesamte Katalysatorgranulat entfernt und wieder befüllt werden.

Der Ein- und Ausbau der Druckgaspatrone mit samt dem Wärmeverteiler hat den Nachteil, dass die Befüllung des Reaktors nur vom Boden aus erfolgen kann. Dies liegt daran, dass das Katalysatorgranulat formschlüssig um den Stern herum angeordnet werden muss, um den Wärmeübergang optimal zu gewährleisten. Außerdem wird bei bekannten Anlagen unter dem oberen Deckel ein zweiter Deckel montiert, der durch Federpakete gegen die Granulatfüllung gedrückt wird und vor dem Befüllvorgang gespannt und nach dem Befüllvorgang gelöst wird. Damit soll ein nach dem Befüllen mögliches Absaugen des Katalysatorgranulats verhindert werden.

Die Befüllung bekannter Einrichtungen mit neuem Katalysator kann aber wegen der Überkopfbefüllung mit Hilfe von Vorrichtungen erfolgen und ist daher am Einsatzort innerhalb der Anlage nicht möglich. Dies führt dazu, dass beim Austausch der Katalysatorpackung der gesamte Behälter ausgebaut und in eine Befüllvorrichtung gebracht werden muss. Dies ist insbesondere bei großen Anlagen, die bis zu 1000 kg wiegen und beim Anwender montiert sind, nachteilig. Auch bei derartigen Anlagen können Heizpatronen nur nach der Montage des gesamten Katalysatorbehälters ausgetauscht werden.

Vorteilhaft ist es, wenn zwischen Sackloch und Heizung ein mit einem Wärmeleitmittel gefüllter Spalt vorgesehen ist. Die Passung der Bohrung gegen die Heizpatrone kann mit einem relativ großem Spaltmaß erfolgen. Insbesondere wenn der Wärmeverteiler ein Flansch aufweist, mit dem er abgedichtet gegen die Unterseite eines Behälterdeckels geschraubt ist, kann der Spalt zwischen Heizpatrone und Wärmeverteiler durch ein Wärmeleitmittel wie eine Paste oder ein Wärmeträgeröl gefüllt werden. Damit wird ein guter Wärmeübergang ermöglicht.

Das in der zitierten Entgegenhaltung vorgeschlagene Hopcalit ist ein Gemisch aus Kupfer und Manganoxid. Der Metalloxidkatalysatoren sind in Reinsubstanz oder auch in beliebigen Mischungsverhältnissen als Vollkontakte oder Träger sehr schlechte elektrische Wärmeleiter. Dies ist bei beheizten Reaktoren nachteilhaft, da die von den Wärmequellen wie beispielsweise Heizpatronen ausgehende Wärme selbst bei Verwendung von Hilfseinbauten nur schwer das gesamte Reaktorbett gleichmäßig erwärmen kann. Um beispielsweise 140 °C an der kältesten Stelle im Reaktorbett zu erreichen, muss in der Regel an der Heizpatrone eine Temperatur von beispielsweise 240 °C eingestellt werden. Dieser hohe Wärmegradient ist dafür verantwortlich, dass der Katalysator langsam, aber irreversibel durch molekulare Umstrukturierung oder Kristallisierung geschädigt wird. Dies führt zu einer verringerten Lebenszeit.

Erfindungsgemäß wird daher vorgeschlagen, dass bei einer Gasaufbereitungsanlage die Heizeinrichtung den Katalysator berührungslos, vorzugsweise über Mikrowellen oder induktiv, erwärmt.

Als Mikrowellen wird das elektromagnetische Spektrum von 300 mH bis 2,45 gH definiert. In diesem Spektrum werden Katalysatoren vom Typ "Mischoxide" mit unterschiedlichen Strukturen wie beispielsweise Tetraeder-, Spinnel- oder Perowskitstruktur angelegt. Die Metalloxide werden dabei aufgrund ihrer Dipolstruktur zu Schwingungen angeregt, was zu einer Erwärmung führt. Besonders vorteilhaft ist dabei, dass die Erwärmung schnell, trägheitslos und dreidimensional, also nicht von den Rändern sondern gleichmäßig und homogen erfolgt. Im Verhältnis zu den bekannten störanfälligen Heizungen unterliegen die als Antennen verwendeten Magnetrone keinem Verschleiß. Da die Katalysatoren gleichmäßig erwärmt werden und auch die Magnetrone in ihrer Funktion nicht mehr ausfallen, wird durch die Verwendung von Mikrowelle die Lebensdauer der Gasaufbereitungsanlage deutlich verlängert.

Edelmetalle wie Platin oder Palladium werden im Mikrowellenfeld nicht angeregt. Für Katalysatoren mit Platin, Palladium, Iridium und Osmium sowie Gemischen daraus wird daher vorgeschlagen als berührungslose Heizung eine Induktionsspule zu verwenden.

Wenn große Mengen Öl in den Katalysator gelangen, überhitzt der Katalysator und wird zerstört. Dies kann beispielsweise beim Bruch einer im Kompressor angeordneten Ölabscheiderpatrone auftreten. Im Extremfall gelangt das Öl sogar auf die Reinluftseite und kontaminiert dort die folgenden Druckluftleitungen. Bei bekannten Anlagen wird dies im Störfall durch eine Übertemperaturwarnung detektiert und das System mittels eines vor dem Lufteingang angeordneten Magnetventils abgesperrt oder der Kompressor wird abgeschaltet. Diese Lösung ist jedoch unbefriedigend, da die Gasaufbereitungsanlage während des Störfalls vollständig ausfällt, was in vielen Fällen einer Betriebsstilllegung gleichkommt.

Erfindungsgemäß wird daher vorgeschlagen, dass die Gasaufbereitungsanlage eine Temperaturmesseinrichtung, ein steuerbares Ventil und einen Löschmittelzufluss aufweist. Im Überhitzungsfall, der durch die Temperaturmesseinrichtung detektiert wird, öffnet das Steuerventil und gibt einen Löschmittelzufluss frei. Der Löschmittelzufluss reduziert die Wärme im Reaktor ohne dass der Reaktor vollständig stillgelegt werden muss.

Vorteilhaft ist es, wenn der Löschmittelzufluss mit einer Druckgasflasche in Verbindung steht. Dies ermöglicht es, über ein Magnetventil Gase wie Helium, Argon oder Stickstoff dem Reaktor zuzuführen, um ihm den für die Verbrennung notwendigen Sauerstoff zu entziehen. Im Überhitzungsfall wird das Magnetventil schlagartig geöffnet, wodurch Helium, Argon oder Stickstoff in den Reaktor eingeblasen werden.

Anstelle von Erstickungsgasen kann auch ein flüssiges Löschmittel verwendet werden. Es wird daher vorgeschlagen, dass der Löschmittelzufluss mit einem Wasser-, vorzugsweise Kondensatzufluss, in Verbindung steht. Im Überhitzungsfall wird dann über eine Kombination aus Ventil und Hochdruckpumpe Wasser in den Reaktor eingespritzt. Als Kühlwasser wird vorteilhafter Weise Kondensat verwendet, das hinter dem Reaktor sowieso anfällt. Durch diese Maßnahme wird nicht nur dem Prozess der Sauerstoff entzogen sondern es wird gleichzeitig auch gekühlt.

Durch diese Maßnahmen oder auch eine Kombination dieser Maßnahmen kann die thermische Zersetzung des Katalysators auch in einem Falle, in dem größere Ölmengen in den Reaktor gelangen, gestoppt werden, um die Prozesssicherheit zu erhöhen.

Das üblicher Weise als Katalysator für Druckgasanlagen verwendete Hopcalit ist eine relativ hohe Toxizität. Durch den hohen Kupfer- und Mangangehalt und sein relativ hoher Preis.

Erfindungsgemäß wird daher vorgeschlagen, dass der Katalysator Eisenoxid oder Manganoxid aufweist.

Überraschender Weise ist es gelungen mit Eisen/Mangan-Katalysatoren auch hochsiedende Kohlenwasserstoffe wie zum Beispiel Kompressorenöle in Druckluftoxidationsanlagen rückstandslos bei Temperaturen von 130 bis 350 °C zu oxidieren. Vorteilhaft werden hierzu Gemische aus Eisenoxid und Mangandioxid als Vollkontakt oder auch auf Trägermaterialien wie Aluminiumoxid oder Keramik eingesetzt. Auch eine Mischung mit Zeolithen kann vorteilhaft sein.

Besonders gute Ergebnisse wurden durch Katalysatoren mit Beimengungen von Mangan, Kobalt, Nickel oder Chrom allein oder auch in Kombination erzielt.

Der Druckabfall der beim Durchströmen der Katalysatorschüttung entsteht, liegt in der Regel zwischen 0,1 und 1,0 bar. In dieser Spanne liegen auch granulierte oder pelletierte Katalysatoren als Vollkontakt oder in geträgerter Form auf Kugeln oder in Pellets sowie als Bruchgranulat vor.

Erfindungsgemäß wird daher vorgeschlagen, dass der Katalysator eine Wabenform aufweist. Erfreulicherweise hat sich herausgestellt, das sogenannte Waben- oder auch Honeycomb-Katalysatoren der Druckabfall auf Werte unter 0,05 bar gesenkt werden kann. Katalysatoren in Wabenform können als Eisenoxidkatalysatoren in Reinsubstanz oder auch auf Trägermaterialien wie Keramik hergestellt werden.

Vorteilhaft ist es, wenn der Katalysator mit Eisen und Mangan oder Kupfer und Mangan beschichtet ist. Dies ist insbesondere bei keramischen Wabenkörpern empfehlenswert. Gerade in Kombination mit einer berührungslosen Heizung, wie insbesondere der Mikrowellenbeheizung, stellt diese Konstruktion eine enorme Verbesserung in technischer und servicefreundlicher Sicht dar.

Vorteilhaft wäre es, Katalysatoren bereitzustellen, die verbesserte Wärmetransporteigenschaften aufweisen, ohne dass die chemische oder katalytische Wirksamkeit reduziert wird und gleichzeitig mechanisch Eigenschaften wie Härte und Abriebfestigkeit zu verbessern.

Erfindungsgemäß wird dies mit Katalysatoren erreicht, bei denen im Katalysator feinst verteilt elektrisch leitende Materialien wie Aluminium, Kupfer oder Silber angeordnet sind.

Bekanntlich werden Katalysatoren, insbesondere Metalloxidkatalysatoren aus wässrigen Lösungen gefällt und durch Abpressen, Granulieren, Trocknen und Aktivieren in ihre Endform hergestellt. Die der Erfindung zugrundeliegende Erkenntnis liegt darin, gute Wärmeleiter bei der Herstellung der Katalysatoren in das Kristallgitter, respektive die Katalysatorenstruktur einzubauen. Überraschender Weise hat sich herausgestellt, dass die Verwendung von metallischen Leitern wie Aluminium, Kupfer oder Silber erhebliche Verbesserungen im Hinblick auf die Katalysatoreneigenschaften mit sich bringt, wenn die Metalle in feinst verteilter Form in die pastöse Katalysatormasse eingebracht werden. Bei einigen Formulierungen wurde nach mehreren Betriebswochen ein Abklingen der elektrischen Leitfähigkeit und der Wärmeleitfähigkeit beobachtet. Die Eigenschaften blieben jedoch auch nach einigen tausend Betriebsstunden günstiger als bei bekannten Katalysatoren.

Besonders gute Eigenschaften im Hinblick auf Festigkeit, Zähigkeit, Wärmeausdehnung, Wärmeleit- und elektrische Leitfähigkeit sowie chemischer Beständigkeit wurden mit Katalysatoren erzielt, die Siliziumkarbid und/oder Aluminiumnitrid aufweisen.

Um derartige Katalysatoren herzustellen, werden beispielsweise nach dem fällenden Abfiltrieren 5 bis 35 Gewichtsprozent (bezogen auf die Trockenmasse) Aluminiumnitridpulver mit einem mittleren Korngrößendurchschnitt von beispielsweise 3 µm möglichst homogen in die Paste eingearbeitet. Anschließend werden die Katalysatoren wie im Stand der Technik bekannt durch Formen, Trocknen und Aktivieren weiter behandelt. Erfreulicherweise konnten je nach Korngröße und Menge des verwendeten Dopingmittels Leichtfähigkeiten erreicht werden, die 10 bis 300mal besser waren als bei undotierten Katalysatoren.

Bekannte Gasaufbereitungsanlagen mit Granulatschüttungen und internen Heizungen erreichen unter bestimmten Bedingungen nicht die höchste Reinigungswirkung in Bezug auf Ölaerosole. Das bedeutet, dass diese Konstruktionen bei der höchsten Reinheitsklasse in Bezug auf Aerosole mit nachgeschalteten Feinstfiltern nachgerüstet werden müssen.

Erfmdungsgemäß wird daher vorgeschlagen, dass der Katalysator eine Filtermatte mit katalytischem Material aufweist. Vorzugsweise wird eine mit katalytisch aktiven Material imprägnierten Hochleistungsfiltermatte aus beispielsweise feinsten Metallfasern, Glasfasern oder Keramikfasern verwendet. Diese Filtermatte kann in der beheizten Zone zwischen der Granulatschüttung oder der Wabenkörpern angeordnet sein. Das aktive Material ist nach der chemischen Struktur vorzugsweise identisch mit dem katalytischem Material im Reaktor und weist somit Metalloxide, vorzugsweise Eisenoxide mit Begleitoxiden auf. Dadurch können diese Filtermatten auch berührungslos und direkt durch Mikrowellen auf die erforderlichen Betriebstemperaturen beheizt werden.

Bei der Verwendung der Filtermatten wird in einem ersten Schritt eine physikalische Abscheidung der Ölaerosole mit anschließender Adsorption auf den Feinstfasern erreicht. Anschließend oxidieren die Aerosole an den Aktivsubstanzen zu Kohlendioxid und Wasser. Die Feinstfasern der Filtermatte regenerieren sich durch die ständige Oxidation immer wieder, wodurch eine Verstopfung der Fasermatte ausgeschlossen ist. Um die Oberfläche zu erhöhen und den Durchflusswiderstand zu reduzieren wird vorgeschlagen, die Feinstfasermatte in plissierter oder ähnlichen die Oberfläche vergrößernden Techniken herzustellen.

Bei einer katalytischen Druckluftaufbereitung wird eine Betriebstemperatur von 130 bis 180 °C im Reaktor eingestellt. Bei dieser Temperatur wird zwar ein Großteil der Pilze und Bakterien abgetötet. Sterilität im Sinne der gängigen Normen wird jedoch nicht erreicht. Insbesondere in der Medizin- oder Verpackungstechnik wird jedoch häufig sterile Druckluft benötigt. Um sterile Druckluft zu erreichen wird vorgeschlagen, dass der Katalysator mit Silbersalzen gedopt ist. Hierzu wird der Katalysator bei der Fällung respektive Herstellung mit Spuren (0,05 bis 0,2 %) Silbersalzen, wie beispielsweise Silbernitrat gedopt. Bei der späteren Aktivierung wird dieses Silberoxid und Homologen gewandelt, welches eine stark bakterizide und bakteriostatische Wirkung entfaltet.

Da die Keimtötung mit wachsender Feuchtigkeit und Druck zunimmt, wird vorgeschlagen, in die bereits wasserdampfgesättigte Druckluft vor dem Reaktor in geringen Mengen Wasser einzuspritzen, um damit die Wärmeübergänge und somit das Abtötungspotenzial zu erhöhen. Hierzu wird eine Gasaufbereitungsanlage vorgeschlagen, die einen Gaszufluss aufweist, in dem ein Wasserzufluss vorgesehen ist.

Außerdem wird vorgeschlagen, dass die beschriebene Filtermatte mit Silberionen geimpft ist. Hierdurch wird ein Feinstfilter erzielt, der zusätzlich die Keimfreiheit steigert. Darüber hinaus wird angeregt, die Verweilzeit von üblicherweise 1,5 bis 2 Sekunden bei Sterilluftanforderung um etwa 50 % zu steigern.

Eine besonders vorteilhafte konstruktive Maßnahme zur Steigerung der Sterilität der Abluft ist die Insito Erzeugung von Strom Ozon im Einbauraum vor dem Katalysatorbett. Diese Ozongenerierung wird durch Hochspannungsentladung, Koronaentladung oder UV-Strahler technisch realisiert.

Umfangreiche Versuchsreihen haben gezeigt, dass mit den einzelnen vorgeschlagenen Maßnahmen über sehr lange Zeiträume keimfreie Luft erzeugt werden kann, da keine Filterelementwechsel notwendig sind und somit auch die Gefahr unbeabsichtigt der Kontamination nahezu ausgeschlossen ist.

Insbesondere zur Oxidation von hochsiedenden Kohlenwasserstoffen werden Reaktortemperaturen von über 140° C benötigt. Wegen der guten Isolationseigenschaften der üblicherweise verwendeten Katalysatoren müssen die Heizpatronen und Wärmeleitflächen auf über 200 °C erhitzt werden, um im Katalysatorbett die erforderlichen 140 °C zu erreichen. Herkömmliche Metalloxidkatalysatoren wie Hopcalit und Eisenkatalysatoren verlieren jedoch bei diesen Temperaturen deutlich an Aktivität.

Es wird daher eine Gasaufbereitungsanlage vorgeschlagen, die eine Ozongenerierungsanlage aufweist.

Vorteilhaft ist eine Einrichtung zur Erzeugung von Koronaentladungen. Dabei wird zwischen zwei Elektroden eine hohe Spannung angelegt, so dass noch kein stabiler elektrischer Durchschlag entsteht. Üblicherweise werden Einzeldurchschläge mit ca. 10 Nanosekunden pro Durchschlag eingestellt. Bei diesen Entladungen entstehen aufgrund der hohen Entladungen Differenzen von über 10.000 Volt bei 20 bis 50 kHz. Eine Vielzahl von freien Elektronen und Ionen, die in der Lage sind organische Moleküle, aber auch die Luft in der Entladungsstrecke zu ionisieren. Dadurch werden auch Kohlenwasserstoffe wie Ölmoleküle durch die hohe Energiedichte teilweise abgebaut und durch das erzeugte Ozon am Katalysator schon bei Temperaturen deutlich unter 140 °C umgesetzt.

Wird die Entladungsstrecke durch Plattenkondensatoren oder Drahtgewebe so gestaltet, dass eine Dauerentladung stattfindet, können signifikante Konzentrationen von Sauerstoffradikalen und Ozon erzeugt werden. Die sind in der Lage das Aktivierungspotential für die Oxidation der Kohlenwasserstoffe auf dem Katalysator zu senken. Bei Versuchen mit einer derartigen Anordnung wurden die Umsetzungsraten für hochsiedende Kohlenwasserstoffe um 10 bis 40 % gesteigert oder bei Temperaturen um 120 °C Umsetzungsraten erzielt, die ohne die Entladung erst bei über 150 °C erzielt werden können.

Mehrer Ausführungsbeispiele erfindungsgemäßer Gasaufbereitungsanlagen sind in der Zeichnung dargestellt und werden im folgenden näher erläutert.

Es zeigt
- Figur 1: schematisch eine perspektivische Ansicht eines Wärmeverteilers,
- Figur 2: schematisch einen Schnitt durch den in Figur 1 gezeigten Wärmeverteiler,
- Figur 3: eine Ansicht des in Figur 1 gezeigten Wärmeverteilers von unten,
- Figur 4: einen teilweisen Schnitt der Anbringung des in Figur 1 gezeigten Wärmeverteilers an einem Behälter mit Kabeldurchführung,
- Figur 5: einen Behälter mit Ozonerzeugungseinrichtung in der Gaszuführung,
- Figur 6: schematisch einen Behälter mit Mikrowellenerzeugungseinrichtung und
- Figur 7: schematisch einen Behälter mit Löscheinrichtung.

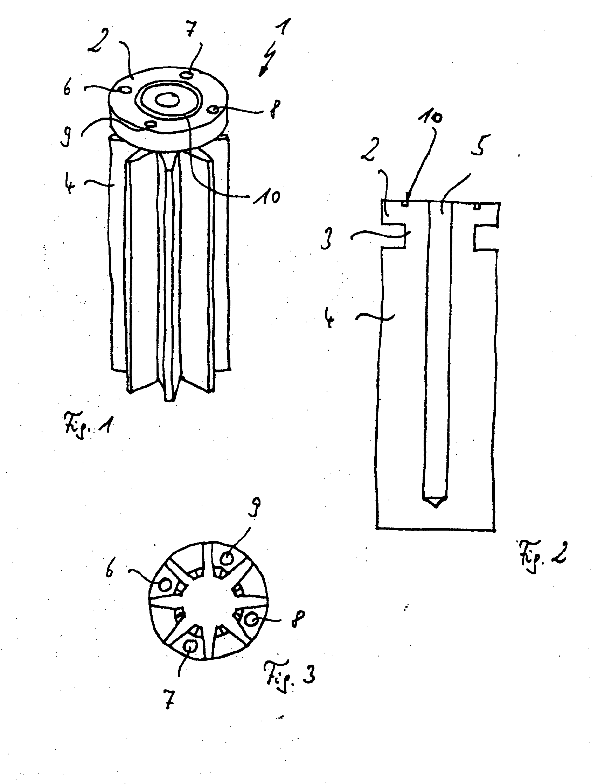

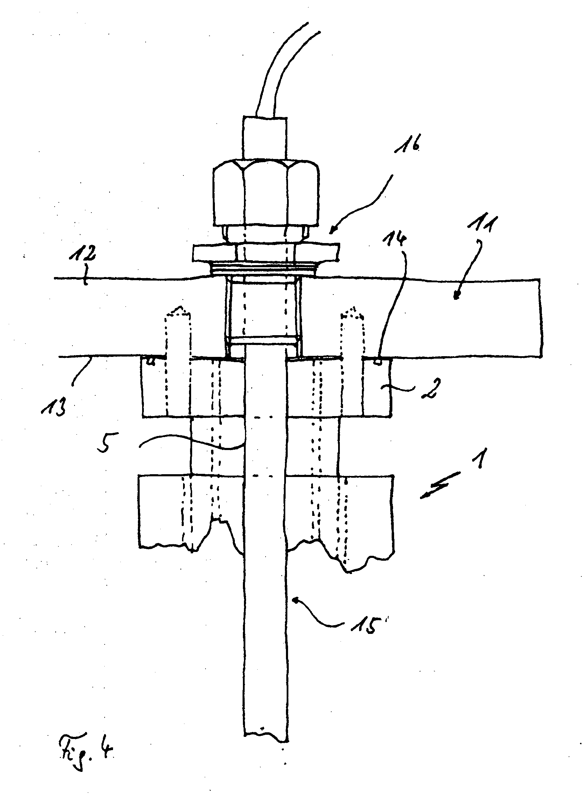

Der in Figur 1 gezeigte Wärmeverteiler 1 besteht aus einem Anschlussflansch 2, einer Verbindung 3 und einem Rippenkörper 4. Durch den Anschlussflansch 2, das Verbindungsteil 3 und den Rippenkörper 4 erstreckt sich axial ein Sachloch 5 (vergleiche Figur 2), das der Aufnahme eine Heizpatrone dient.

Am Flansch 2 sind vier Bohrungen 6, 7, 8, 9 angeordnet und radial innerhalb dieser Bohrungen ist eine ringförmige Ausnehmung 10 zum Einbringen einer Dichtung vorgesehen.

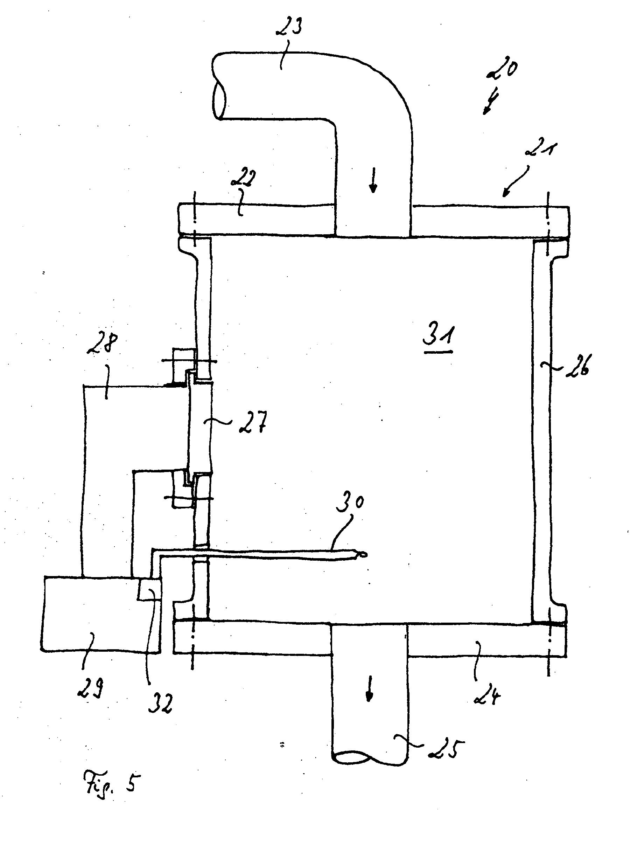

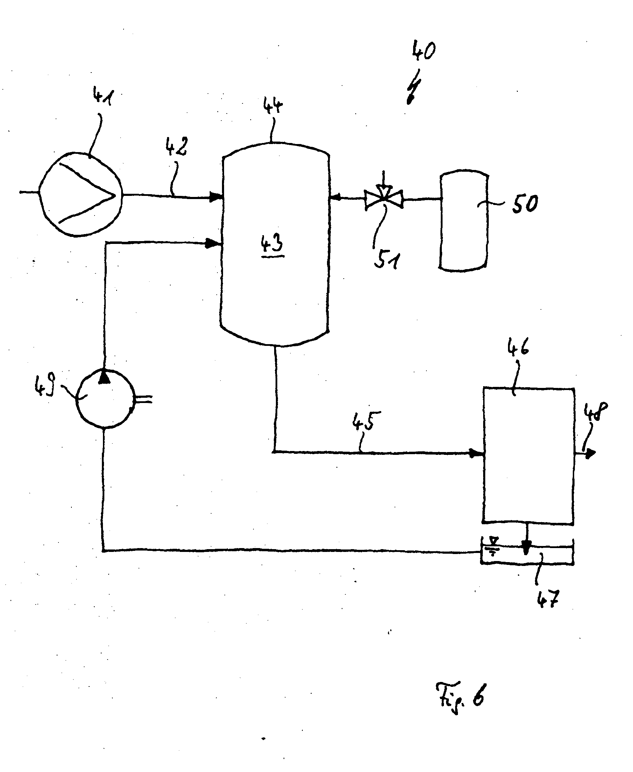

Die Figur 4 zeigt, wie der in Figur 1 gezeigte Wärmeverteiler 1 am Flansch 2 an einen Behälter 11 angeschraubt ist. Zur Abdichtung zwischen dem Sackloch 5 im Wärmeverteiler 1 und dem Behälter 11 ist zwischen der Unterseite 13 des Behälterdeckels 12 und dem Flansch 2 des Wärmeverteilers 1 eine ringförmige Dichtung 14 eingerbacht. In das Sackloch 5 ist eine Heizpatrone 15 eingeführt, die im Bereich des Sackloches mit einem flüssigen Wärmeleitmedium umgeben ist. Die Heizpatrone 15 weist eine gerade Einschraubverschraubung 16 auf, die für eine dichte Abdichtung zwischen der Heizpatrone 15 und dem Deckel 12 des Behälters 11 sorgt.

Die beschriebene Konstruktion erlaubt es, die Heizpatrone durch lösen der Einschraubverschraubung 16 aus dem Sackloch 5 des Wärmeverteilers 1 heraus zuziehen, ohne dass der Wärmeverteiler 1 aus dem Behälter 11 entfernt werden muss. Dies erleichtert die Wartungsarbeiten beträchtlich.

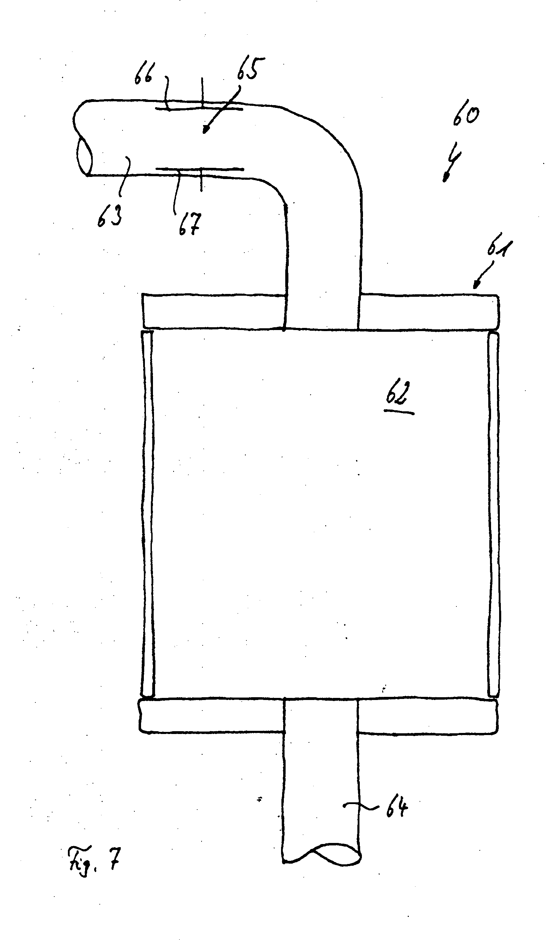

Figur 5 zeigt als Beispiel einer berührungslosen Heizeinrichtung eine Druckluftaufbereitungsanlage 20 mit einem Behälter 21 an dessen Oberseite 22 ein Lufteingang 23 und an dessen Unterseite 24 ein Luftausgang 25 vorgesehen sind.

Im Bereich des zylinderförmigen Mantels 26 ist ein Fenster 27 aus Teflon-Quarz oder Aluminiumnitrid vorgesehen, das abdichtend mit einem Mirkowellenhohlleiter 28 in Verbindung steht. Dieser Mikrowellenhohlleiter 28 führt zu einem Mirkowellengenerator 29, der mit einem Thermofühler 30 in Verbindung steht.

Im Betrieb ist die Druckluftaufbereitungsanlage 21 mit Katalysatormaterial 31 gefüllt. Der Mikrowellengenerator 29 erzeugt Mikrowellen, die über den Hohlleiter 28 und das Fenster 27 auf das Katalysatormaterial 31 treffen. Das Katalysatormaterial 31 wird hierbei erwärmt. Dies wird über den Thermofühler 30 gemessen, der die Temperatur an einen Regler 32 meldet. Dieser steuert den Mikrowellengenerator, so dass in der Druckluftaufbereitungsanlage 21 das Katalysatormaterial 31 auf einer konstanten Temperatur gehalten wird.

Wenn pro Zeiteinheit zu viele brennbare Bestandteile wie insbesondere Öltröpfchen in eine katalytisch arbeitende Gasaufbereitungsanlage gelangen, überhitzt sich diese. Dies führt meist zu einer starken Schädigung des Katalysators. Um dies zu vermeiden wird bei Überhitzung ein Löschmittel in den Katalysator eingebracht. Die Figur 6 zeigt die Verwendung des am Drucklufttrockner anfallenden Kondensats als Löschmittel im Falle einer Überhitzung des Katalysators. Die schematische Darstellung zeigt eine Anlage 40 mit einem Kompressor 41, der Druckluft 42 in einen mit Katalysator 43 gefüllten Druckbehälter 44 fördert. Das gereinigte Druckgas 45 strömt zu einem Kältetrockner 46, in dem die Luftfeuchtigkeit als Kondensat 47 entnommen wird. Die getrocknete Druckluft 48 steht dann am Kältetrockner 46 zur weiteren Verwendung zur Verfügung. Das Kondensat 47 kann bei Überhitzung des Katalysators 43 mittels der Pumpe 49 in die Druckluftaufbereitungsanlage 44 eingespritzt werden. Dadurch wird das Katalysatormaterial 43 gekühlt und vor einer Überhitzung geschützt.

Im vorliegenden Ausführungsbeispiel ist zusätzlich noch ein Gasdruckbehälter 50 vorgesehen. Dieser Behälter ist mit einem Edelgas wie Argon oder Helium gefüllt und steht über ein Regelventil 51 mit der Druckluftaufbereitungsanlage 44 in Verbindung. Bei einer Überhitzung des Katalysators 43 in der Druckluftaufbereitungsanlage 44 kann somit das Regelventil 51 geöffnet werden. Dies führt dazu; dass das Druckgas zum Katalysator 43 gelangt und den Oxidationsvorgang erstickt.

Die beschriebenen Löscheinrichtungen können kumulativ oder alternativ eingesetzt werden und erlauben es, die Druckluftaufbereitungsanlage im Überhitzungsfall zu kühlen, ohne den Fluss des Druckgases zu stoppen. Außerdem kann je nach Intensität der Überhitzung geregelt gelöscht und dadurch gekühlt werden.

Um die Qualität der katalytischen Gasaufbereitung zu steigern und die Temperatur am Katalysator zu senken ist vorgeschlagen, am Drucklufteingang eine Ozonanreicherung vorzusehen. Eine derartige Anlage zeigt Figur 7. Bei der dort dargestellten Gasaufbereitungsanlage 60 ist ein Behälter 61 vorgesehen, der mit einem Katalysatormaterial 62 gefüllt ist. Das Druckgas gelangt über die Druckgaseingangsleitung 63 in den Behälter 61 und durchströmt dort das Katalysatormaterial 62, um durch die Ausgangsleitung 64 die Gasaufbereitungsanlage wieder zu verlassen. In der Eingangsleitung 63 ist ein Hochspannungsgenerator 65 angeordnet, der zwischen zwei Elektroden 66 und 67 Ozon und ein Ionenplasma erzeugt, welches mit der Druckluft zum Katalysatormaterial 62 gelangt.

## Patentansprüche

1. Gasaufbereitungsanlage mit einem Behälter, einer Heizeinrichtung und einem Katalysator, ***dadurch gekennzeichnet, dass*** die Heizeinrichtung einen Wärmeverteiler mit einem Sackloch und einer darin angeordneten Heizung aufweist und die Heizung beweglich im Sackloch angeordnet ist.

2. Gasaufbereitungsanlage nach Anspruch 1, ***dadurch gekennzeichnet, dass*** der Behälter im Bereich des Sackloches eine druckdicht verschließbare Öffnung aufweist.

3. Gasaufbereitungsanlage nach Anspruch 1 oder 2, ***dadurch gekennzeichnet, dass*** der Wärmeverteiler einen Flansch aufweist, mit dem er gegen die Unterseite eines Behälterdeckels geschraubt ist.

4. Gasaufbereitungsanlage nach einem der vorhergehenden Ansprüche, ***dadurch gekennzeichnet, dass*** zwischen Sackloch und Heizung ein mit einem Wärmeleitmittel gefüllter Spalt vorgesehen ist.

5. Gasaufbereitungsanlage mit einem Behälter, einer Heizeinrichtung und einem Katalysator, ***dadurch gekennzeichnet, dass*** die Heizeinrichtung den Katalysator berührungslos, vorzugsweise über Mikrowellen oder induktiv erwärmt.

6. Gasaufbereitungsanlage mit einem Behälter, einer Heizeinrichtung und einem Katalysator, ***dadurch gekennzeichnet, dass*** sie eine Temperaturmesseinrichtung, ein steuerbares Ventil und einen Löschmittelzufluss aufweist.

7. Gasaufbereitungsanlage nach Anspruch 6, ***dadurch gekennzeichnet, dass*** der Löschmittelzufluss mit einer Druckgasflasche in Verbindung steht.

8. Gasaufbereitungsanlage nach Anspruch 6 oder 7, ***dadurch gekennzeichnet*, *dass*** der Löschmittelzufluss mit einem Wasser-, vorzugsweise Kondensatzufluss, in Verbindung steht.

9. Gasaufbereitungsanlage mit einem Behälter, einer Heizeinrichtung und einem Katalysator, ***dadurch gekennzeichnet, dass*** der Katalysator Eisenoxid und/oder Manganoxid aufweist.

10. Gasaufbereitungsanlage nach Anspruch 9, ***dadurch gekennzeichnet, dass*** der Katalysator Zeolithe aufweist.

11. Gasaufbereitungsanlage nach Anspruch 9 oder 10, ***dadurch gekennzeichnet, dass*** der Katalysator Beimengungen von Mangan, Kobalt, Nickel oder Chrom aufweist.

12. Gasaufbereitungsanlage nach Anspruch 9 bis 12, ***dadurch gekennzeichnet, dass*** der Katalysator eine Wabenform aufweist.

13. Gasaufbereitungsanlage nach einem der Ansprüche 9 bis 12, ***dadurch gekennzeichnet, dass*** der Katalysator mit Eisenoxid und/oder Manganoxid beschichtet ist.

14. Gasaufbereitungsanlage nach einem der Ansprüche 9 bis 13, ***dadurch gekennzeichnet, dass*** im Katalysator feinst verteilt elektrisch leitende Materialien wie Aluminium, Kupfer oder Silber angeordnet sind.

15. Gasaufbereitungsanlage nach einem der Ansprüche 9 bis 14, ***dadurch gekennzeichnet, dass*** der Katalysator Siliziumkarbid und/oder Aluminiumnitrid aufweist.

16. Gasaufbereitungsanlage nach einem der Ansprüche 9 bis 15, ***dadurch gekennzeichnet, dass*** der Katalysator eine Filtermatte mit katalytischem Material aufweist.

17. Gasaufbereitungsanlage nach Anspruch 16, ***dadurch gekennzeichnet, dass*** die Filtermatte mit Silberionen geimpft ist.

18. Gasaufbereitungsanlage nach einem der Ansprüche 9 bis 17, ***dadurch gekennzeichnet, dass*** der Katalysator mit Silbersalzen gedopt ist.

19. Gasaufbereitungsanlage mit einem Behälter, einer Heizeinrichtung und einem Katalysator, ***dadurch gekennzeichnet, dass*** sie einen Gaszufluss aufweist, in dem ein Wasserzufluss vorgesehen ist.

20. Gasaufbereitungsanlage mit einem Behälter, einer Heizeinrichtung und einem Katalysator, ***dadurch gekennzeichnet, dass*** sie eine Ozongenerierungsanlage aufweist.
